# EUROPEAN PATENT APPLICATION

(11) **EP 3 582 473 A1**
(43) Date of publication of application: **18.12.2019**
(21) Application number: 18759838.8
(22) Date of filing: 07.05.2018
(51) Int. Cl.: H04M 1/04, F16M 13/04, F16M 11/00, G03B 17/56, H04B 1/3877, G06F 1/16

(54) **HANDHELD CAMERA STABILIZER AND HOLDING MECHANISM THEREOF**

(30) Priority: 28.04.2018 CN 201810403891
(71) Applicant: Guangdong Sirui Optical Co., Ltd, Zhongshan, Guangdong 528458 (CN)
(72) Inventor: The designation of the inventor has not yet been filed
(74) Representative: Lavoix
(86) International application number: PCT/CN2018/085835
(87) International publication number: WO 2019/205185

(57) **Abstract**

The present invention pertains to the technical field of photographing equipment, and in particular relates to a handheld ball head and a holding mechanism thereof. The holding mechanism comprises: a main body; grippers, provided in pairs and movably disposed on the main body, wherein each gripper is able to reciprocate along its holding direction relative to the main body; a holding width keeping mechanism, provided on the main body, for keeping a holding width between each pair of the gripper so as to cause the holding width to match a gripped photographing device; a regulating mechanism, provided on the main body, for regulating a distance between one gripper of each pair of the grippers and the main body in the holding direction, thereby regulating a relative position between a holding center of each pair of the grippers and a center of the main body under a condition that the holding width of each pair of the grippers is kept constant. The handheld ball head and the holding mechanism thereof provided by the present invention can adjust the position of gravity center of a gripped photographing device during the using process, so that the position of gravity center of the photographing device better matches the predetermined area of gravity center of the ball head, thereby reducing the load for the motor thereof and making the ball head more convenient to use.

## Description

### Technical Field

The present invention pertains to the technical field of photographing equipment, and in particular relates to a handheld ball head and a holding mechanism thereof.

### Background

Along with booming of live broadcast industry and popularization of photographing activities among the general public, handheld ball heads are increasingly widely used. A handheld ball head generally comprises a handle and a ball head disposed on the handle, the ball head has a gripping mechanism for gripping a photographing device. Handheld ball heads are classified into single-shaft type and multi-shaft type, a single-shaft handheld ball head (or a multi-shaft handheld ball head) can drive the ball head to rotate in a single dimension (or in multiple dimensions), so as to realize stable tracking-photographing by the ball head. Irrespective of whether it is a single-shaft handheld ball head or a multi-shaft handheld ball head, there is always one rotation shaft having an axis parallel to the optical axis of the lens of the gripped photographing device, this rotation shaft is a transverse-rolling shaft around which the photographing device can be driven to rotate reciprocally in a plane where it is located. The gripping center of the gripping mechanism is generally kept as close as possible to or aligned with the axis of the transverse-rolling shaft, so as to facilitate the free rotation of the photographing device driven by a transverse-rolling motor. However, as new types of photographing devices emerge, or as new auxiliary components are added to the existing photographing devices, the gravity center of the photographing device may deviate from the predetermined area of gravity center of the handheld ball head, in one aspect, this increases the load for the motor and causes increased power consumption and shortened endurance time of the device; in another aspect, this adds to discomfort of the user who is holding the device, and the user is more apt to feel tired.

In consideration of this, a handheld ball head with adjustable gravity center is proposed in prior art, its cellphone gripping mechanism comprises an upper gripper and a lower gripper connected by a telescopic assembly, with a gripper body slidably disposed on the telescopic assembly, the handheld ball head also has a posing arm for mounting the cellphone gripping mechanism, and the gripper body is also slidably disposed on the posing arm. Although this prior art enables the gripped photographing device to move up, down, left and right relative to the transverse-rolling shaft so as to adjust its position of gravity center, however, its up-and-down adjustment in a direction perpendicular to the posing arm is not reliable; its telescopic assembly comprises a sliding track and a screw rod able to be telescoped in the sliding track, the gripper body is slidably disposed on the sliding track, the up-and-down movement of the photographing device is realized by linear sliding of the sliding track in the gripper body when the adjustment is performed, but in an actual using process, once the photographing device is gripped onto the cellphone gripping mechanism, the upper gripper and the lower gripper would grip the cellphone to the center of the gripping mechanism under the action of the spring, with the upper gripper and the lower gripper having symmetric positions relative to the cellphone, which has no difference from an ordinary elastic gripping mechanism, and thus an adjustment function cannot be effected.

### Summary of the Invention

Therefore, a technical problem to be solved by the present invention is how to overcome the defects in prior art that the holding mechanism of handheld ball head cannot adjust the position of gravity center of the photographing device during a using process, by providing a holding mechanism for handheld ball head that can adjust the position of gravity center of the gripped photographing device so that the position of gravity center of the photographing device better matches the predetermined area of gravity center of the ball head.

A handheld ball head equipped with the above-mentioned holding mechanism is further provided.

The technical scheme adopted by the present invention is as follows:
A holding mechanism for handheld ball head comprises: a main body; grippers, provided in pairs and movably disposed on the main body, wherein each gripper is able to reciprocate along its holding direction relative to the main body; a holding width keeping mechanism, provided on the main body, for keeping a holding width between each pair of the gripper so as to cause the holding width to match a gripped photographing device; a regulating mechanism, provided on the main body, for regulating a distance between one gripper of each pair of the grippers and the main body in the holding direction, thereby regulating a relative position between a holding center of each pair of the grippers and a center of the main body under a condition that the holding width of each pair of the grippers is kept constant.

The holding center is a straight line passing through the center between a pair of grippers along the holding direction. The grippers are provided in pairs on the main body, and each gripper thereof is able to reciprocate along its holding direction relative to the main body; the regulating mechanism acts on one gripper of each pair of grippers to move the gripper relative to the main body, so as to change a distance between the gripper and the main body in the holding direction; and under the condition that the holding width of each pair of grippers is kept constant, by regulating the distance between one gripper and the main body, the other gripper thereof is caused to move along with it, so that the position of the holding center of the pair of grippers is changed. After placing a photographing device into a pair of grippers, if the gravity center of the photographing device deviates from the holding center of the grippers, the holding center of the pair of grippers can be changed by regulating the distance between one gripper thereof and the main body, irrespective of whether the holding width of the pair of grippers is always invariably fixed or is adjustable to be kept at different preset widths. For example, if the distance between the pair of grippers is always invariably fixed, i.e. the two grippers keep moving synchronously, regulating one gripper thereof to move towards or away from the main body necessarily causes the other gripper thereof to move away from or towards the main body, so that the holding center of the pair of grippers is moved; if the distance between the pair of grippers is adjustable by respectively moving the two grippers relative to the main body so as to respectively adjust the distance from an individual gripper to the main body, the holding center is naturally also moved arbitrarily, with a larger adjustment range; if the distance between the pair of grippers is adjustable by respectively moving the two grippers relative to the main body so as to respectively adjust the distance from an individual gripper to the main body but at the same time the two grippers are elastically tensioned therebetween, when holding the photographing device in the pair of grippers with the holding width of the grippers is kept constant, regulating one gripper thereof to move towards or away from the main body necessarily causes the other gripper thereof to move away from or towards the main body, so that the position of the holding center can also be adjusted. With such an arrangement, when the gravity center of the photographing device deviates from the center of the main body, the holding center of the grippers can be adjusted to move relative to the main body in a direction opposite to the deviation direction, so as to cause the gravity center of the photographing device gripped by the grippers move correspondingly in a direction towards the center of the main body, so that the condition of gravity deviation is alleviated for the photographing device, and the gravity center of the photographing device is made as close as possible to the center of the main body, thereby having a function of adjusting the gravity center of the handheld ball head, which is more beneficial for the self-balance of the handheld ball head after gripping the photographing device, and in the meantime, a suitable position of the gravity center can reduce the power consumption for the corresponding motor, so that the motor can more easily drive the movement of the ball head.

The regulating mechanism comprises a regulating structure for driving the gripper to move relative to the main body, and a driving structure for driving the regulating structure. The user can use the driving structure to drive the regulating structure to regulate the position of the gripper relative to the main body, which is more convenient to regulate. The driving structure may be an electric motorized driving structure, or may be a manual driving structure.

The driving structure is disposed on an outer side of the gripper. The arrangement of the driving structure at this place is reasonable in design and is convenient for regulating, wherein the operation of the driving structure would not be interfered by the movement of the gripper.

The regulating structure is a screw-threaded regulating structure. By means of the screw-threaded regulating structure, a screw-threaded cooperation movement is converted into a movement of the gripper towards or away from the main body, which has a simple structure, is convenient to operate and is not vulnerable to damage. The screw-threaded regulating structure may be a cooperation structure of screw bolt and screw nut, or may be a cooperation structure of guide screw rod and nut, wherein the guide screw rod is provided on the main body, and the gripper has an internal screw thread, the gripper cooperates by its internal screw thread with the screw thread of the guide screw rod so as to be movably arranged on the guide screw rod, so that the gripper can be rotated to make itself reciprocate along the guide screw rod.

The screw-threaded regulating structure comprises an internal screw thread provided on the main body and a screw rod connected with the gripper to be regulated, the screw rod is arranged to cooperate with the internal screw thread to cause the gripper to reciprocate along a direction towards or away from the main body.

The driving structure is a regulating knob fixedly provided on an end portion of the screw rod, the regulating knob is adapted for driving the screw rod to cooperate with the internal screw thread by rotation. When the regulating knob is rotated to tighten the screw rod, the gripper moves towards the main body. When the regulating knob is rotated to loosen the screw rod, the gripper moves away from the main body.

The screw rod passes through the gripper, and the regulating knob is disposed on an outer side of the gripper. The screw rod may also not penetrate the gripper, with one end of the screw rod fixedly connected with the regulating knob and one end of the regulating knob abutting against an inner side of the gripper, so that the regulating knob can be rotated to push the gripper away from the main body or release the gripper towards the main body.

The holding width keeping mechanism is a resilient holding structure. This resilient holding structure can automatically adjust the holding width by its elastic holding force, which is more convenient and comfortable to use.

The resilient holding structure comprises a receiving cavity provided in the main body, a sliding rod that slidably cooperates with the receiving cavity, and a resilient biasing member disposed between the sliding rod and the receiving cavity; wherein a resilient biasing force of the resilient biasing member acted on the sliding rod causes the sliding rod to have a tendency to retract into the receiving cavity, the gripper is connected on one end of the sliding rod which protrudes out of the receiving cavity.

The holding width keeping mechanism may also be a connecting rod fixedly connected between a pair of grippers. The connecting rod may have an invariable length, and as the holding width of the pair of grippers is kept at the preset width, the regulating mechanism can regulate one gripper thereof to cause the other gripper to move, so as to realize adjustment of the holding center; or the connecting rod may be a telescopic rod, and in cooperation with a locking structure, it can lock the holding position of the pair of grippers at different holding widths.

The holding width keeping mechanism may also include another regulating mechanism acting on the other gripper of the pair of grippers. As the two regulating mechanisms respectively act on the two grippers, the distances from the two grippers to the main body can be independently regulated, so that the holding center can naturally be moved arbitrarily, with a larger adjustment range.

The gripper comprises a stationary portion, and a movable portion movably connected on the stationary portion; wherein the stationary portion is provided on the main body, and the movable portion has a retracted state of being close to the main body and a gripping state of being away from the main body. This is convenient for reducing the volume of the holding mechanism in order to be easy to carry around. It needs to be noted that, the retracting thereof may be by folding, or may be by telescoping.

The movable portion is hinged on the stationary portion, so as to be able to rotate towards or away from the holding center to realize switching between the retracted state and the gripping state.

A handheld ball head comprises a handle and the above-mentioned holding mechanism which is provided on the handle; wherein, the main body of the holding mechanism is provided on the handle. By adjusting the position of gravity center of the holding mechanism, the holding gravity center better matches the gravity center of the handheld ball head, which makes it easy for the user to grab and lift the device and makes the use thereof more convenient and effortless.

The handle is provided with a rotation portion that is able to rotate relative to the handle, the main body is fixedly provided on the rotation portion. By adjusting the holding gravity center of the holding mechanism to match the rotation center of the rotation portion, it avoids the situation that deviation of the gravity center of the photographing device from the predetermined area of gravity center of the handheld ball head causes the load of the driving mechanism that rotates the rotation portion to increase, leads to increase of power consumption of the device, shortens the endurance time, and even causes overload protection to happen which renders the ball head unusable.

The handheld ball head also comprises a driving mechanism for driving the rotation portion to rotate, the driving mechanism is a brush motor. The brush motor has a simpler structure than a brushless motor, as well as a cheaper price and more developed and reliable technology and techniques. The brush motor may be a Direct-Current brush motor.

### Brief Description of the Drawings

In order to more clearly describe the technical schemes in the specific embodiments of the present invention or in the prior art, hereinafter, the accompanying drawings to be used in the description of the specific embodiments or the prior art will be briefly introduced. Apparently, the drawings described below show some of the embodiments of present invention, and for those skilled in the art, without expenditure of creative labor, other drawings can be derived on the basis of these accompanying drawings.
Figure 1 is a stereogram showing the movable portions of the grippers of the handheld ball head provided in Embodiment 1 of the present invention in a retracted state;
Figure 2 is a stereogram showing the movable portions of the grippers of the handheld ball head shown in Figure 1 in a gripping state;
Figure 3 is a back view of the handheld ball head shown in Figure 1 gripping a photographing device;
Figure 4 is a right view of the handheld ball head shown in Figure 3 gripping a photographing device;
Figure 5 is an enlarged view of portion A shown in Figure 4
Figure 6 is a partial sectional view of the handheld ball head shown in Figure 4 gripping a photographing device;
Figure 7 is another partial sectional view of the handheld ball head shown in Figure 1 gripping a photographing device;
Figure 8 a schematic diagram showing a process for adjusting the holding center when the handheld ball head shown in Figure 1 grips a photographing device.

### Reference signs:

1-resilient holding structure, 11-main body, 111-receiving cavity, 112-sliding rod, 113-resilient biasing member, 12-gripper, 121-stationary portion, 122-movable portion, 13-screw rod, 14-regulating knob, 2-handle, 21-rotation portion, 22-brush motor, 3-photographing device.

### Detailed Description of Embodiments

A clear and complete description of the technical scheme of the present invention is given below, in conjunction with the accompanying drawings. Apparently, the described embodiments are a part, but not all, of the embodiments of the present invention. All the other embodiments, derived by those skilled in the art on the basis of the embodiments described in the present invention without expenditure of creative labor, are included in the protection scope of the present invention.

In the description of the present invention, it needs to be noted that, terms such as "center", "above", "below", "left", "right", "vertical", "horizontal", "inside", "outside" refer to the orientation or positional relation based on the illustration of the drawings, which is merely for facilitating and simplifying the description of the present invention, not for indicating or implying that the referred apparatus or component must have a particular orientation or must be configured or operated in a particular orientation, therefore is not to be construed as a limitation towards the present invention. In addition, terms such as "first", "second", "third" are merely for the purpose of description and are not to be construed as an indication or implication of relative importance thereof.

In the description of the present invention, it needs to be noted that, unless specifically defined or restricted otherwise, terms such as "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units. For a person skilled in the art, the specific meaning of the aforementioned terms in the present invention can be understood according to specific situations thereof.

Furthermore, the technical features involved in the various embodiments of the present invention described below can be combined with one another as long as they do not conflict with one another.

### Embodiment 1

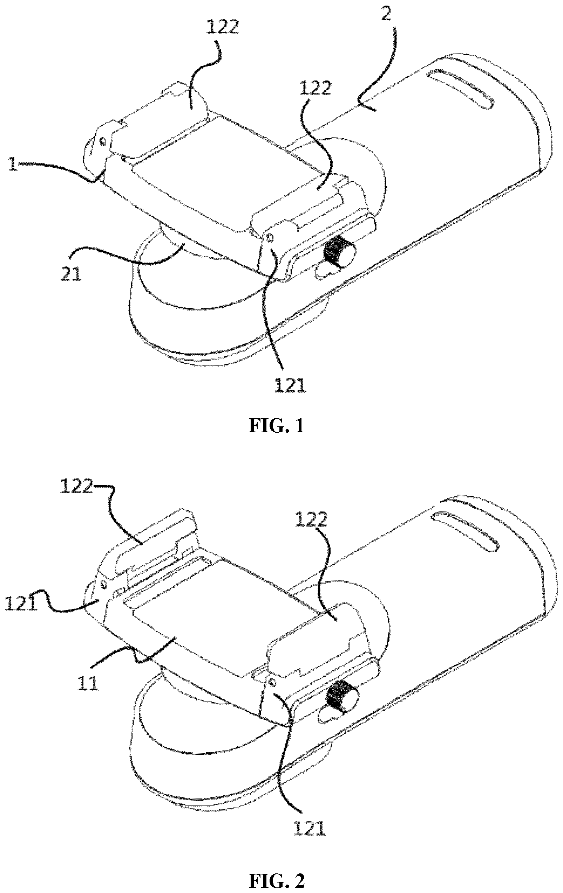

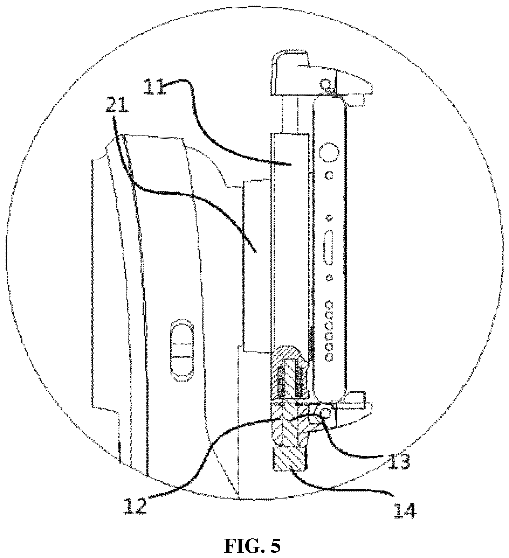

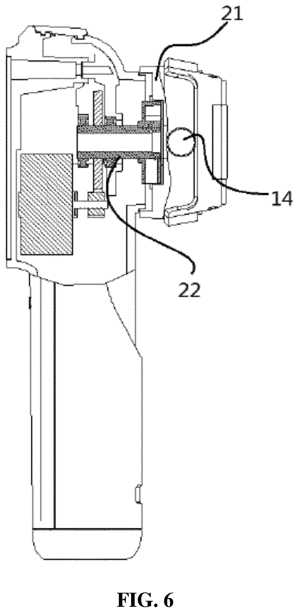

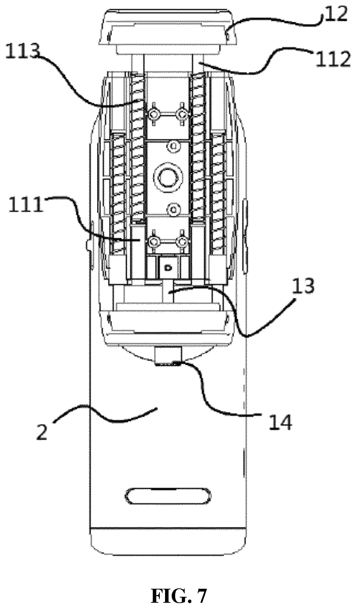

As shown in Figures 1-8, the present embodiment provides a holding mechanism for handheld ball head, which comprises: a main body 11; grippers 12, provided in pairs and movably disposed on the main body 11, wherein each gripper 12 is able to reciprocate along its holding direction relative to the main body 11; a holding width keeping mechanism, provided on the main body 11, for keeping a holding width between each pair of the gripper 12 so as to cause the holding width to match a gripped photographing device 3; a regulating mechanism, provided on the main body 11, for regulating a distance between one gripper 12 of each pair of the grippers 12 and the main body 11 in the holding direction, thereby regulating a relative position between a holding center of each pair of the grippers 12 and a center of the main body 11 under a condition that the holding width of each pair of the grippers 12 is kept constant.

The holding center is a straight line passing through the center between a pair of grippers 12 along the holding direction. The grippers 12 are provided in pairs on the main body 11, and each gripper 12 thereof is able to reciprocate along its holding direction relative to the main body 11; the regulating mechanism acts on one gripper 12 of each pair of grippers 12 to move the gripper 12 relative to the main body 11, so as to change a distance between the gripper 12 and the main body 11 in the holding direction; and under the condition that the holding width of each pair of grippers 12 is kept constant, by regulating the distance between one gripper 12 and the main body 11, the other gripper 12 thereof is caused to move along with it, so that the position of the holding center of the pair of grippers 12 is changed. After placing a photographing device 3 into a pair of grippers 12, if the gravity center of the photographing device 3 deviates from the holding center of the grippers 12, the holding center of the pair of grippers 12 can be changed by regulating the distance between one gripper 12 thereof and the main body 11, irrespective of whether the holding width of the pair of grippers 12 is always invariably fixed or is adjustable to be kept at different preset widths.

For example, if the distance between the pair of grippers 12 is always invariably fixed, i.e. the two grippers 12 keep moving synchronously, regulating one gripper 12 thereof to move towards or away from the main body 11 necessarily causes the other gripper 12 thereof to move away from or towards the main body 11, so that the holding center of the pair of grippers 12 is moved; if the distance between the pair of grippers 12 is adjustable by respectively moving the two grippers 12 relative to the main body 11 so as to respectively adjust the distance from an individual gripper 12 to the main body 11, the holding center is naturally also moved arbitrarily, with a larger adjustment range; if the distance between the pair of grippers 12 is adjustable by respectively moving the two grippers 12 relative to the main body 11 so as to respectively adjust the distance from an individual gripper 12 to the main body 11 but at the same time the two grippers 12 are elastically tensioned therebetween, when holding the photographing device 3 in the pair of grippers 12 with the holding width of the grippers 12 is kept constant, regulating one gripper 12 thereof to move towards or away from the main body 11 necessarily causes the other gripper 12 thereof to move away from or towards the main body 11, so that the position of the holding center can also be adjusted. With such an arrangement, when the gravity center of the photographing device 3 deviates from the center of the main body 11, the holding center of the grippers 12 can be adjusted to move relative to the main body 11 in a direction opposite to the deviation direction, so as to cause the gravity center of the photographing device 3 gripped by the grippers 12 to move correspondingly in a direction towards the center of the main body 11, so that the condition of gravity deviation is alleviated for the photographing device 3, and the gravity center of the photographing device 3 is made as close as possible to the center of the main body 11, thereby having a function of adjusting the gravity center of the handheld ball head, which is more beneficial for the self-balance of the handheld ball head after gripping the photographing device 3, and in the meantime, a suitable position of the gravity center can reduce the power consumption for the corresponding motor, so that the motor can more easily drive the movement of the ball head.

This embodiment adopts the option that the distance between the pair of grippers 12 is adjustable by respectively moving the two grippers 12 relative to the main body 11 so as to respectively adjust the distance from an individual gripper 12 to the main body 11 but at the same time the two grippers 12 are elastically tensioned therebetween. Specifically, the holding width keeping mechanism is a resilient holding structure 1. The resilient holding structure 1 comprises a receiving cavity 111 provided in the main body 11, a sliding rod 112 that slidably cooperates with the receiving cavity 111, and a resilient biasing member 113 disposed between the sliding rod 112 and the receiving cavity 111; wherein a resilient biasing force of the resilient biasing member 113 acted on the sliding rod 112 causes the sliding rod 112 to have a tendency to retract into the receiving cavity 111, the gripper 12 is connected on one end of the sliding rod 112 which protrudes out of the receiving cavity 111.

Each gripper 12 is connected with two sliding rods 112 arranged in parallel, and correspondingly, the main body 11 has two receiving cavities 111 adapted for the sliding rods 112 to slide in. The resilient biasing member 113 is an elastic spring sleeved on each sliding rod 112, the receiving cavity 111 at its opening has a radial flange with a reduced diameter, the sliding rod 112 has a radial flange with an increased diameter, and the elastic spring is situated between the two radial flanges with its two axial ends respectively abutting against the two radial flanges. When the elastic spring is in a natural state, the gripper 12 is in its initial position. When the elastic spring is in a stretched state, the gripper 12 is in its gripping position, and the restoring force of the elastic spring acted on the gripper 12 causes the sliding rod 112 to have a tendency to return to its initial position, thereby realizing resilient gripping of the photographing device 3.

The regulating mechanism comprises a regulating structure for driving the gripper 12 to move relative to the main body 11, and a driving structure for driving the regulating structure. The user can use the driving structure to drive the regulating structure to regulate the position of the gripper 12 relative to the main body 11, which is more convenient to regulate. And the driving structure is disposed on an outer side of the gripper 12. The arrangement of the driving structure at this place is reasonable in design and is convenient for regulating, wherein the operation of the driving structure would not be interfered by the movement of the gripper 12. In this embodiment, the driving structure is a manual driving structure.

Specifically, the regulating structure is a screw-threaded regulating structure. The screw-threaded regulating structure comprises an internal screw thread provided on the main body 11 and a screw rod 13 connected with the gripper 12 to be regulated, the screw rod 13 is arranged to cooperate with the internal screw thread to cause the gripper 12 to reciprocate along a direction towards or away from the main body 11, which has a simple structure, is convenient to operate and is not vulnerable to damage.

The driving structure is a regulating knob 14 fixedly provided on an end portion of the screw rod 13, the regulating knob 14 can be rotated to drive the screw rod 13 to cooperate with the internal screw thread. When the regulating knob 14 is rotated to tighten the screw rod 13, the gripper 12 moves towards the main body 11. When the regulating knob 14 is rotated to loosen the screw rod 13, the gripper 12 moves away from the main body 11. The screw rod 13 passes through the gripper 12, and the regulating knob 14 is disposed on an outer side of the gripper 12. The screw rod 13 may also not penetrate the gripper 12, with one end of the screw rod 13 fixedly connected with the regulating knob 14 and one end of the regulating knob 14 abutting against an inner side of the gripper 12, so that the regulating knob 14 can be rotated to push the gripper 12 away from the main body 11 or release the gripper 12 towards the main body 11.

The gripper 12 comprises a stationary portion 121, and a movable portion 22 movably connected on the stationary portion 121; wherein the stationary portion 121 is provided on the main body 11, and the movable portion 122 has a retracted state of being close to the main body 11 and a gripping state of being away from the main body 11. The movable portion 122 is hinged on the stationary portion 121, so as to be able to rotate towards or away from the holding center to realize switching between the retracted state and the gripping state. This arrangement is convenient for reducing the volume of the holding mechanism in order to be easy to carry around.

The present embodiment also provides a handheld ball head, which is in particular a single-shaft handheld ball head. The handheld ball head comprises a handle 2, a rotation portion 21 provided on the handle 2, and a holding mechanism as described above provided on the rotation portion 21. By adjusting the holding gravity center of the holding mechanism to match the rotation center of the rotation portion 21, it avoids the situation that deviation of the gravity center of the photographing device 3 from the predetermined area of gravity center of the handheld ball head causes the load of the driving mechanism that rotates the rotation portion 21 to increase, leads to increase of power consumption of the device, shortens the endurance time, and even causes overload protection to happen which renders the ball head unusable.

The handheld ball head also comprises a driving mechanism for driving the rotation portion 21 to rotate, the driving mechanism is a brush motor 22. The brush motor 22 has a simpler structure than a brushless motor, as well as a cheaper price and more developed and reliable technology and techniques. The brush motor 22 may be a Direct-Current brush motor.

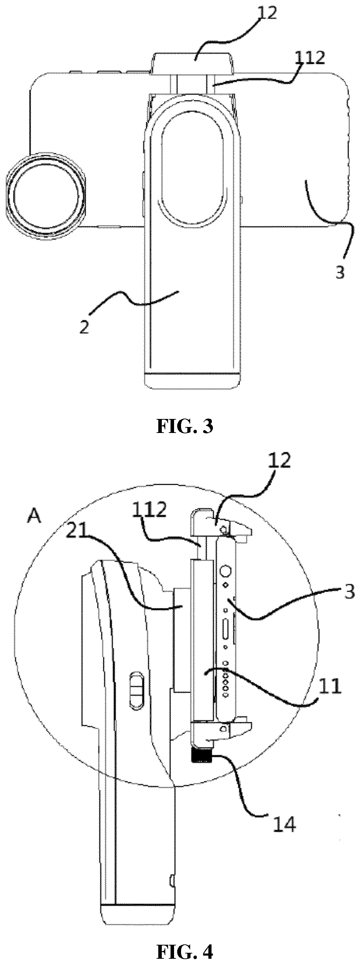

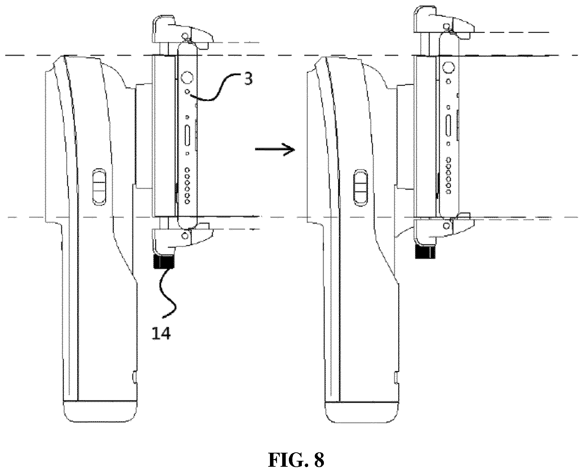

The working process of the handheld ball head is as follows: as shown in Figures 3-4, the photographing device 3 is a cellphone with an auxiliary unit added at its camera lens, which makes the gravity center of the photographing device 3 to move downwards relative to the gravity center of the cellphone itself; the grippers 12 are propped open and the photographing device 3 is put between the pair of grippers 12 so as to be gripped, and under the action of the resilient holding structure 1, the grippers 12 resiliently grips the photographing device 3. If there is no influence from the regulating mechanism, the pair of grippers 12 would be symmetrically disposed on the two sides of the main body 11, causing the gravity center of the photographing device 3 to be located below the center of the main body 11, and because the center of the main body 11 is consistent with the driving shaft center of the driving mechanism at the rotation center of the rotation portion 21, the gravity center of the photographing device 3 would be located below driving shaft center of the driving mechanism at the rotation center of the rotation portion 21, therefore, deviation of gravity center occurs. At this time, as shown from left to right in Figure 8, the regulating knob 14 is rotated to tighten the screw rod 13, so that the distance from the gripper 12 directly pushed by the screw rod 13 to the main body 11 gradually decreases, and because the holding width always keeps matching the width of the photographing device 3, the other gripper 12 is moved to cause its distance to the main body 11 to gradually increase, so that the pair of grippers 12 as a whole moves upwards relative to the handle 2, and the holding center thereof also moves upwards along with it, and as the main body 11 is stationary relative to the handle 2, the holding center of the pair of grippers 12 moves upwards relative to the center of the main body 11, which causes the gravity center of the photographing device 3 to move upwards so as to become closer to the center of the main body 11 and thus closer to the driving shaft center of the driving mechanism at the rotation center of the rotation portion 21, thereby making the position of gravity center of the photographing device 3 better match the predetermined area of gravity center of the handheld ball head. Conversely, if the gravity center of the photographing device 3 is located higher than the center of the main body 11, the screw rod 13 is regulated in the opposite direction so as to cause the gravity center of the photographing device 3 to move downwards.

As an alternative implementation of Embodiment 1, the driving structure may be an electric motorized driving structure that uses a button to control an electric motor to drive a screw rod to rotate in a clockwise or counter-clockwise direction.

As an alternative implementation of Embodiment 1, the screw-threaded regulating structure may be a cooperation structure of screw bolt and screw nut, or may be a cooperation structure of guide screw rod and nut, wherein the guide screw rod is provided on the main body, and the gripper has an internal screw thread, the gripper cooperates by its internal screw thread with the screw thread of the guide screw rod so as to be movably arranged on the guide screw rod, so that the gripper can be rotated to make itself reciprocate along the guide screw rod.

As an alternative implementation of Embodiment 1, the movable portion of the gripper may also be retracted by telescoping, wherein, the stationary portion has an insertion cavity for the movable portion to be inserted in. When gripping is needed, the movable portion can be fastened at a position that protrudes out of the insertion cavity. When retracting is needed, the movable portion can be telescoped into the insertion cavity, thereby facilitating retraction thereof.

As an alternative implementation of Embodiment 1, the holding width keeping mechanism may also be a connecting rod fixedly connected between a pair of grippers. The connecting rod may have an invariable length, the connecting rod passes through the main body or is provided on a surface of the main body, and as the holding width of the pair of grippers is kept at the preset width, the regulating mechanism can regulate one gripper thereof to cause the other gripper to move, so as to realize adjustment of the holding center; or the connecting rod may be a telescopic rod, and in cooperation with a locking structure, it can lock the holding position of the pair of grippers at different holding widths.

As an alternative implementation of Embodiment 1, the holding width keeping mechanism may also include another regulating mechanism acting on the other gripper of the pair of grippers. As the two regulating mechanisms respectively act on the two grippers, the distances from the two grippers to the main body can be independently regulated, so that the holding center can naturally be moved arbitrarily, with a larger adjustment range.

As an alternative implementation of Embodiment 1, the handheld ball head is a three-shaft handheld ball head.

Apparently, the aforementioned embodiments are merely examples illustrated for clearly describing the present invention, rather than limiting the implementation ways thereof. For a person skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present invention.

## Claims

1. A holding mechanism for handheld ball head, **characterized in** comprising:
a main body (11);
grippers (12), provided in pairs and movably disposed on the main body (11), wherein each gripper (12) is able to reciprocate along its holding direction relative to the main body (11);
a holding width keeping mechanism, provided on the main body (11), for keeping a holding width between each pair of the grippers (12) so as to cause the holding width to match a gripped photographing device;
a regulating mechanism, provided on the main body (11), for regulating a distance between one gripper (12) of each pair of the grippers (12) and the main body (11) in the holding direction, thereby regulating a relative position between a holding center of each pair of the grippers (12) and a center of the main body (11) under a condition that the holding width of each pair of the grippers (12) is kept constant.

2. The holding mechanism according to Claim 1, **characterized in that**, the regulating mechanism comprises a regulating structure for driving the gripper (12) to move relative to the main body (11), and a driving structure for driving the regulating structure.

3. The holding mechanism according to Claim 2, **characterized in that**, the driving structure is disposed on an outer side of the gripper (12).

4. The holding mechanism according to any one of Claims 1-3, **characterized in that**, the regulating structure is a screw-threaded regulating structure.

5. The holding mechanism according to Claim 4, **characterized in that**, the screw-threaded regulating structure comprises an internal screw thread provided on the main body (11) and a screw rod (13) connected with the gripper (12) to be regulated, the screw rod (13) is arranged to cooperate with the internal screw thread to cause the gripper (12) to reciprocate along a direction towards or away from the main body (11).

6. The holding mechanism according to Claim 5, **characterized in that**, the driving structure is a regulating knob (14) fixedly provided on an end portion of the screw rod (13), the regulating knob (14) is adapted for driving the screw rod (13) to cooperate with the internal screw thread by rotation.

7. The holding mechanism according to Claim 6, **characterized in that**, the screw rod (13) passes through the gripper (12), and the regulating knob (14) is disposed on an outer side of the gripper (12).

8. The holding mechanism according to any one of Claims 1-7, **characterized in that**, the holding width keeping mechanism is a resilient holding structure (1).

9. The holding mechanism according to Claim 8, **characterized in that**, the resilient holding structure (1) comprises
a receiving cavity (111) provided in the main body (11),
a sliding rod (112) that slidably cooperates with the receiving cavity (111), and
a resilient biasing member (113) disposed between the sliding rod (112) and the receiving cavity (111);
wherein a resilient biasing force of the resilient biasing member (113) acted on the sliding rod (112) causes the sliding rod (112) to have a tendency to retract into the receiving cavity (111), the gripper (12) is connected on one end of the sliding rod (112) which protrudes out of the receiving cavity (111).

10. The holding mechanism according to any one of Claims 1-7, **characterized in that**, the gripper (12) comprises
a stationary portion (121), and
a movable portion (122) movably connected on the stationary portion (121);
wherein the stationary portion (121) is provided on the main body (11), and the movable portion (122) has a retracted state of being close to the main body (11) and a gripping state of being away from the main body (11).

11. The holding mechanism according to Claim 8, **characterized in that**, the movable portion (122) is hinged on the stationary portion (121), so as to be able to rotate towards or away from the holding center to realize switching between the retracted state and the gripping state.

12. A handheld ball head, **characterized in** comprising
a handle (2), and
the holding mechanism (1) according to any one of Claims 1-11 which is provided on the handle (2);
wherein, the main body (11) is provided on the handle (2).

13. The handheld ball head according to Claim 12, **characterized in that**, the handle (2) is provided with a rotation portion (21) that is able to rotate relative to the handle (2), the main body (11) is fixedly provided on the rotation portion (21).

14. The handheld ball head according to Claim 13, **characterized in** further comprising a driving mechanism for driving the rotation portion (21) to rotate, the driving mechanism is a brush motor (22).
